(19) Europäisches Patentamt

European Patent Office

Office européen des brevets

(11) **EP 2 990 840 B1**

(12) **FASCICULE DE BREVET EUROPEEN**

(45) Date de publication et mention de la délivrance du brevet:
**15.02.2017 Bulletin 2017/07**

(21) Numéro de dépôt: **15181931.5**

(22) Date de dépôt: **21.08.2015**

(51) Int Cl.:
*G02B 5/126* (2006.01)   *G02B 5/124* (2006.01)
*G01S 17/42* (2006.01)   *G01C 3/00* (2006.01)
*G01C 15/00* (2006.01)   *G02B 27/32* (2006.01)
*G01S 5/16* (2006.01)   *A42B 3/04* (2006.01)

(54) **SYSTEME DE DETECTION DE POSTURE A RETROREFLECTEUR COMPORTANT UN MAILLAGE FILAIRE**

SYSTEM ZUR POSITIONSERFASSUNG MIT EINEM RETROREFLEKTOR, DAS EIN DRAHTGEFLECHT UMFASST

SYSTEM FOR DETECTING POSTURE WITH A RETROREFLECTOR COMPRISING A WIRE MESH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2014 FR 1401928**

(43) Date de publication de la demande:
**02.03.2016 Bulletin 2016/09**

(73) Titulaire: **THALES**
**92400 Courbevoie (FR)**

(72) Inventeurs:
• BARBIER, Bruno
  **33000 BORDEAUX (FR)**

• POTIN, Laurent
  **33187 LE HAILLAN Cedex (FR)**
• ROUZES, Siegfried
  **33185 LE HAILLAN (FR)**

(74) Mandataire: **Bréda, Jean-Marc et al**
**Marks & Clerk France**
**Conseils en Propriété Industrielle**
**Immeuble " Visium "**
**22 Avenue Aristide Briand**
**94117 Arcueil Cedex (FR)**

(56) Documents cités:
**US-A- 5 274 379     US-A1- 2010 245 806**
**US-A1- 2012 206 808     US-A1- 2014 016 138**
**US-B1- 7 800 758**

**Description**

Le domaine de l'invention est celui des dispositifs optiques permettant de mesurer l'orientation d'un objet dans l'espace sans contact. Il existe divers domaines d'applications possibles mais l'application principale est la détection de posture de casque de pilote d'aéronef, permettant ainsi de projeter dans sa visière une image en superposition exacte sur le paysage extérieur ou d'asservir différents systèmes de l'appareil sur son regard. On entend par posture d'un objet son orientation et sa position par rapport à un repère connu.

Il existe différentes techniques optiques permettant de faire de la mesure d'orientation sur casque. Généralement, on installe sur le casque des éléments remarquables qui sont repérés par un système optique d'émission et de réception. La position des images de ces éléments remarquables permet de déterminer par calcul la position et l'orientation du casque.

On peut utiliser, à cette fin, des coins de cube rétroréfléchissants ou rétroréflecteurs. Il suffit de disposer les organes optiques d'émission et de réception sur un même axe. Ces systèmes à rétroréflecteurs sont, par nature, peu sensibles à l'éclairement solaire.

A titre d'exemple de réalisation, ils peuvent être combinés à un dispositif fixe optoélectronique comportant une source ponctuelle associée à un ensemble comportant un ou deux capteurs matriciels sans objectif optique. Dans cette disposition, le réflecteur est équipé d'un masque appliqué sur sa face d'entrée. Ce masque comporte une partie centrale transparente et une partie périphérique opaque. Le contour du masque est en forme de polygone, matérialisant ainsi au moins l'orientation de deux directions fixes du casque. L'orientation du casque est calculée par analyse des formes du contour projetées sur le ou les capteurs. L'analyse porte sur les transitions entre les zones lumineuses et obscures du reflet reçu par le capteur.

Pour déterminer l'orientation et la position du réflecteur, seules sont utilisées, soit les projections des côtés du contour du masque polygonal, soit, en l'absence de masque, les projections des côtés du contour polygonal du réflecteur.

Chaque côté du contour fournit, par projection centrale sur un plan, deux directions concourantes et donc un point de fuite.

En périphérie du champ angulaire, seuls deux côtés du contour sont effectivement projetés. Il s'agit de deux côtés consécutifs du contour, ils fournissent sur le plan quatre directions concourantes deux à deux, soit deux points de fuite.

En partie centrale du champ angulaire, au moins trois côtés du contour sont effectivement projetés. Ils fournissent sur le plan au moins six directions concourantes deux à deux, soit trois points de fuite.

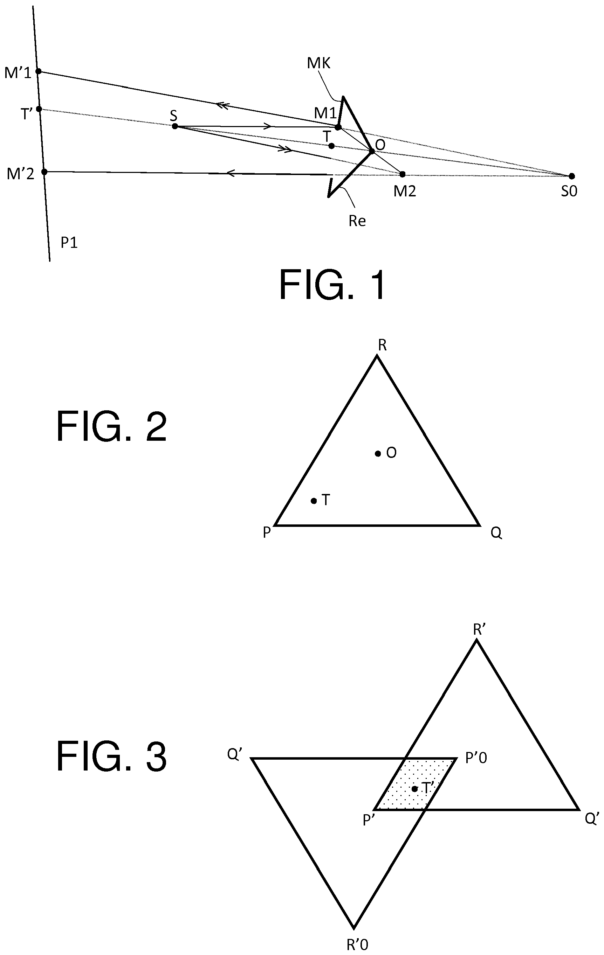

Les figures 1 à 6 illustrent ce phénomène du nombre de points de fuite dans le cas simplifié d'un réflecteur à contour triangulaire équilatéral:

La figure 1 représente le principe général de la projection sur un plan P1 d'un point M1 du contour du masque du réflecteur Re de sommet O, à partir du rayonnement de la source ponctuelle S, proche de P1. Le point T est l'intersection de la face d'entrée du réflecteur et de la droite SO. Sur P1, la projection de T commune avec celle de O est le point T'.

La figure 2 représente la face d'entrée d'un réflecteur en coin de cube sans masque, à face d'entrée triangulaire équilatérale PQR.

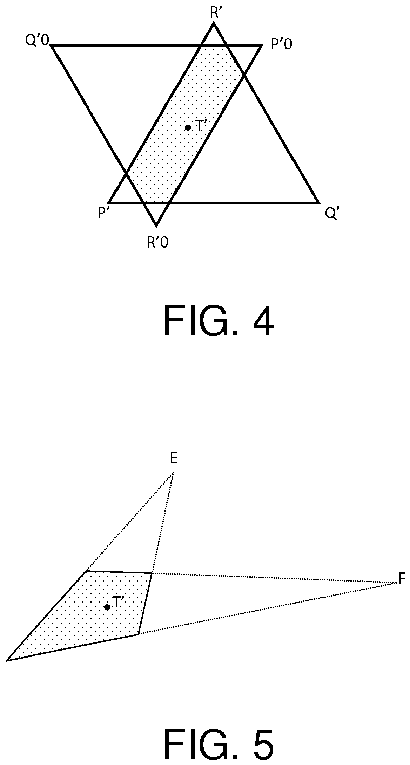

Les figures 3 et 4 représentent, pour une source ponctuelle d'éclairage à l'infini, c'est-à-dire une source S loin du réflecteur, le reflet représenté en grisé obtenu par projection sur un capteur d'image proche de la source S, dans le cas particulier où ce plan de projection est parallèle à la face d'entrée du réflecteur. Deux configurations se présentent. La première configuration est représentée en figure 3. Le rayonnement incident est proche du bord de champ angulaire du réflecteur. Le contour est un parallélogramme. La seconde configuration est représentée en figure 4. Le rayonnement incident est alors proche du centre du champ angulaire. Le contour est un hexagone à côtés parallèles deux à deux. Ces contours sont tous deux centrés sur la projection T' de T, centre de symétrie entre les triangles symétriques projetés P'-Q'-R' et P'0-Q'0-R'0.

Lorsque le plan de projection n'est pas parallèle au plan de la face d'entrée PQR, les reflets se déforment, mais pour chacun des contours de reflet, leurs côtés restent parallèles deux à deux. Les sommets et les côtés de chaque reflet sont symétriques par rapport au point T', projection du point T.

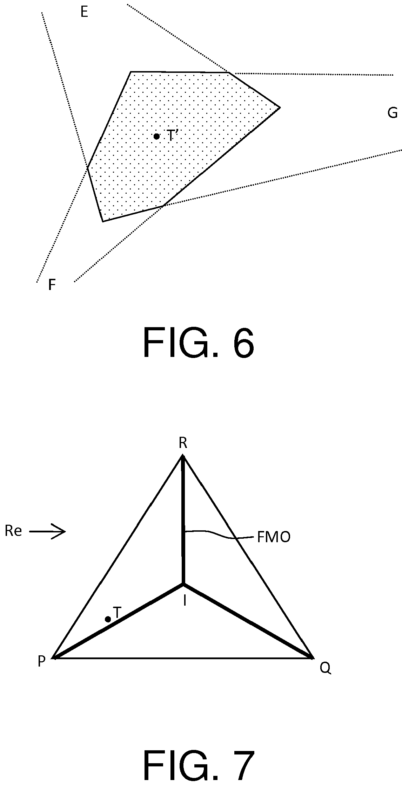

Lorsque la source S est à distance finie, les côtés du contour des reflets polygonaux ne sont plus parallèles entre eux, le reflet n'a plus de centre de symétrie mais T' reste le point de concours des diagonales issues des sommets opposés du contour du reflet et les intersections des côtés opposés fournissent respectivement sur le plan de projection qui correspond au plan du capteur deux points de fuite en bord de champ angulaire comme on le voit sur la figure 5 et trois points de fuite en champ angulaire central comme on le voit sur la figure 6.

La réduction de trois à deux du nombre de points de fuite en passant du champ central au bord de champ est, bien entendu, comme indiqué plus haut, également valable dans le cas d'un réflecteur à contour polygonal ou à contour de masque polygonal qui peut être plan ou non.

Par conséquent, quel que soit le contour polygonal, autre que le masque en parallélogramme, pour déterminer les six inconnues d'orientation/position, on mesure, en bord de champ, seulement quatre paramètres correspondant aux coordonnées de deux points de fuite. Ainsi, en bord de champ, la mesure d'orientation/position est difficilement réalisable, sans l'aide soit d'un dispositif annexe fixe à proximité de la source comme, par exemple, un écran occultant ou une épargne dans un miroir de renvoi, soit d'un second capteur. C'est le premier inconvénient des systèmes de détection de posture à masque selon l'art antérieur.

D'autre part, un réflecteur en coin de cube présente une ambiguïté d'orientation, rien ne distinguant a priori les différents côtés du masque. Un codage de forme réalisé au moyen de marquages en forme d'entailles ou de bossages est donc appliqué sur le contour du réflecteur ou de son masque à proximité des sommets. De cette façon, la projection de ce codage permet d'associer de façon non équivoque chacun des sommets de la figure projetée à un des sommets du contour du réflecteur ou de son masque. La réalisation des différentes marques et leur repérage constitue le second inconvénient des systèmes de détection de posture à masque selon l'art antérieur.

Enfin, le champ angulaire d'un réflecteur en coin de cube est limité à un angle solide de $\pi/2$ sr. Ce champ n'est pas suffisant pour couvrir, par exemple, les débattements de tête d'un utilisateur. Il faut donc avoir recours à plusieurs coins de cube d'orientation différente pour couvrir un champ plus important. C'est le troisième inconvénient des systèmes de détection de posture à masque selon l'art antérieur.

Le système de détection de la posture d'un objet mobile selon l'invention ne présente pas ces inconvénients. Le rétroréflecteur comporte un maillage filaire ou une « cage » générant à l'intérieur du reflet projeté des ombres filiformes qui participent à la mesure. Ces ombres, constituées de lignes sombres sur le fond clair du reflet, sont aisément repérées, même en présence d'une surface sombre telle que celle générée par un écran fixe ou par l'épargne d'un miroir.

Plus précisément, l'invention a pour objet un système de détection de la posture d'un objet mobile dans l'espace comprenant :

- un dispositif fixe électro-optique d'orientation connue comprenant au moins une source d'émission, un capteur d'images et des moyens d'analyse d'images, et
- un ensemble optique comprenant au moins un rétroréflecteur optique disposé sur l'objet mobile,

caractérisé en ce que :

- le rétroréflecteur optique est une sphère optique d'indice variable comportant un hémisphère transparent et un hémisphère réfléchissant tel qu'un rayon lumineux, réfracté par l'hémisphère transparent, réfléchi par l'hémisphère réfléchissant et réfracté une seconde fois par l'hémisphère transparent ressorte parallèlement à sa direction d'incidence ;
- le rétroréflecteur optique comporte un maillage comportant au moins trois fils opaques, d'épaisseur faible et d'agencement géométrique connu ;
- l'image du rétroréflecteur éclairé par la source forme un reflet sur le capteur d'images, ledit reflet comportant au moins les deux images de l'ombre d'un des trois fils par le rétroréflecteur ;
- les moyens d'analyse d'image détectent l'orientation de la ligne de fuite donnée par lesdites images, ladite orientation étant représentative d'un premier paramètre de la posture de l'objet mobile.

Avantageusement, les moyens d'analyse détectent la forme du reflet, ladite forme étant représentative d'au moins un second paramètre de la posture de l'objet mobile.

Avantageusement, le maillage des fils comporte huit fils droits de longueur égale, quatre premiers fils formant un carré et quatre seconds fils étant parallèles entre eux, perpendiculaires au plan du carré, une des extrémités des quatre seconds fils étant confondue avec une des extrémités des quatre premiers fils.

Avantageusement, le maillage des fils comporte quatre fils semi-circulaires de forme identique, deux premiers fils étant disposés dans deux premiers plans parallèles symétriquement par rapport au centre de la sphère, deux seconds fils étant disposés dans deux seconds plans parallèles symétriquement par rapport au centre de la sphère, les deux seconds plans étant perpendiculaires aux deux premiers plans.

Avantageusement, le maillage comporte des troisièmes fils semi-circulaires de forme identique coupant obliquement les premiers fils et/ou les seconds fils.

Avantageusement, le contour du reflet est une ellipse inclinée, l'inclinaison de l'ellipse, les longueurs du grand et du petit axe étant représentative de paramètres de la posture de l'objet mobile.

L'invention s'applique à la détection de posture d'un casque de pilote. Le casque comporte alors un rétroréflecteur optique tel que décrit plus haut.

L'invention sera mieux comprise et d'autres avantages apparaîtront à la lecture de la description qui va suivre donnée à titre non limitatif et grâce aux figures annexées parmi lesquelles :

Les figures 1 à 6 déjà commentées représentent le fonctionnement d'un système de détection de posture à rétroréflecteur selon l'art antérieur ;

La figure 7 représente un exemple de rétroréflecteur en coin de cube ;

Les figures 8 à 12 représentent les différents reflets obtenus sur le capteur d'images avec le rétroréflecteur de la figure 7,

La figure 13 représente un second exemple de rétroréflecteur en coin de cube;

Les figures 14 à 17 représentent les différents reflets obtenus sur le capteur d'images avec le rétroréflecteur de la figure 13 ;

La figure 18 représente un rétroréflecteur sphérique mis en oeuvre par le système selon l'invention ;

La figure 19 représente un mode de réalisation d'un rétroréflecteur sphérique mis en oeuvre par le système selon l'invention ;

Les figures 20 à 22 et 24 et 25 représentent la propagation des rayons lumineux dans un rétroréflecteur sphérique mis en oeuvre par le système selon l'invention ;

Les figures 23 et 26 représentent les images de différents points obtenus sur le capteur d'images par rétroréflexion sur le rétroréflecteur sphérique ;

Les figures 27 à 32 représentent différentes vues d'un premier maillage d'un rétroréflecteur sphérique selon l'invention ;

Les figures 33 à 35 représentent les différents reflets obtenus sur le capteur d'images avec le rétroréflecteur des figures 27 à 30 ;

Les figures 36 à 39 représentent différentes vues d'un second maillage d'un rétroréflecteur sphérique selon l'invention ;

Les figures 40 et 41 représentent les différents reflets obtenus sur le capteur d'images avec le rétroréflecteur des figures 36 à 39 ;

La figure 42 représente une variante du second maillage d'un rétroréflecteur sphérique selon l'invention ;

La figure 43 représente le reflet obtenu sur le capteur d'images avec le rétroréflecteur de la figure 42.

Le système de détection de la posture d'un objet mobile dans l'espace comprend basiquement :

- un dispositif fixe électro-optique d'orientation connue comprenant au moins une première source d'émission ponctuelle, un capteur plan matriciel d'images et des moyens électroniques d'analyse d'images, et
- un ensemble optique comprenant au moins un rétroréflecteur optique disposé sur l'objet mobile, le rétroréflecteur optique comporte un maillage comportant au moins trois fils opaques, d'épaisseur faible et d'agencement géométrique connu ;
- l'image du rétroréflecteur éclairé par la source forme un reflet sur le capteur d'images, ledit reflet comportant au moins les deux images de l'ombre d'un des trois fils par le rétroréflecteur ;
- les moyens d'analyse d'image détectent l'orientation de la ligne de fuite donnée par les dites images, ladite orientation étant représentative d'un des paramètres de la posture de l'objet mobile.

Il existe différents types de rétroréflecteurs. Le plus couramment utilisé est le coin de cube. On peut également utiliser une sphère réfléchissante d'indice optique particulier. Il existe également différentes configurations géométriques du maillage. Deux exemples de rétroréflecteur et de son maillage filaire sont décrits ci-dessous, ainsi que deux modes de réalisation de système selon l'invention, ces derniers n'étant pas limitatifs.

Dans les différentes figures associées aux différents exemples et modes de réalisation, on a adopté les conventions suivantes :

- les éléments du maillage ou leurs reflets sont représentés en traits gras ;
- les reflets obtenus sur le capteur d'image sont représentés par des motifs en pointillés.

**Premier exemple : Réflecteur en coin de cube avec cage à trois tiges**

Dans ce premier exemple, le rétroréflecteur Re est un coin de cube. Il comporte trois faces planes réfléchissantes perpendiculaires deux à deux et une face d'entrée plane transparente de forme triangulaire. Comme on le voit sur la figure 7, la face d'entrée triangulaire notée PQR comporte trois tiges FMO droites coplanaires disposées en étoile reliant le centre I de la face avant à chaque sommet du contour triangulaire.

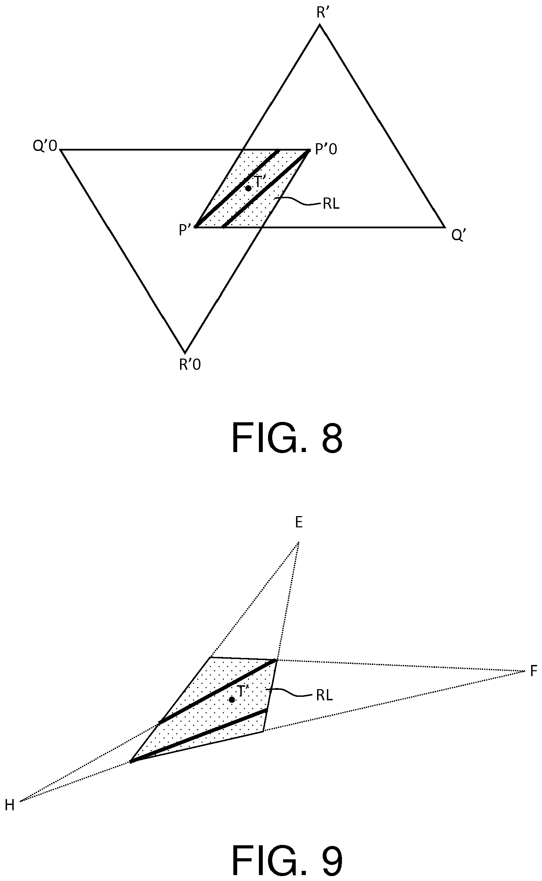

Lorsque le rétroréflecteur est éclairé par une source S ponctuelle en bord du champ angulaire du réflecteur à distance infinie et lorsque l'orientation de la face d'entrée PQR du rétroréflecteur est parallèle au plan du capteur, on obtient, comme représenté sur la figure 8 :

- un reflet lumineux RL dont le contour est un parallélogramme, intersection des images P'Q'R' et P0'Q0'R0' de la face d'entrée PQR du coin de cube ;
- ce reflet est traversé par deux ombres de tiges, rectilignes parallèles aisément discriminables par rapport au fond lumineux ;
- ces deux droites sont issues de deux sommets opposés du parallélogramme et sont symétriques par rapport au point T' projection du point T et centre du parallélogramme lumineux. Comme précédemment, le point T est l'intersection de la face d'entrée du réflecteur et de la droite SO.

Dans le cas général où la source S est en bord de champ angulaire du réflecteur et à distance finie et où l'orientation du réflecteur est quelconque par rapport au plan du capteur, on obtient comme indiqué sur la figure 9:

- un reflet lumineux RL dont le contour est un quadrilatère à côtés non parallèles ;
- ce reflet est traversé par deux ombres rectilignes non parallèles aisément discriminables par rapport au fond lumineux ;
- ces deux droites noires sont issues de deux sommets opposés du quadrilatère ;
- On détermine ainsi trois points de fuite qui sont les points E et F, intersections des droites portant les côtés du reflet et le point H, intersection des deux droites noires.

La position du centre de projection S0 est donnée par l'intersection commune de trois surfaces de révolution SR1, SR2 et SR3 d'axes respectifs EF, EH et FH. Ces trois surfaces sont définies de la façon suivante.

- La surface SR1 correspond à l'ensemble des points de l'espace depuis lesquels le segment EF est vu sous un angle A constant. Cet angle A est l'angle entre les deux directions dont E et F sont les points de fuite par projection, c'est-à-dire l'angle entre les côtés PR et PQ du contour du réflecteur, A vaut donc 60 degrés. Il s'ensuit que :

  - SR1 est un tore, l'angle A étant inférieur à 90 degrés ;
  - d'axe EF ;
  - centré au milieu de EF ;
  - de rayon majeur $d=EF/(2tg60°)$ ;
  - de rayon mineur $r=EF/(2sin60°)$ ;
  - SR1 est un tore est fermé, c'est-à-dire en forme de citrouille, car r est supérieur à d.

- La surface SR2, de la même façon, est centrée sur le milieu de EH, elle est construite à partir de l'angle entre les droites PR et PI, soit 30°.
- La surface SR3, de la même façon, est centrée sur le milieu de FH, elle est construite à partir de l'angle entre les droites PQ et PI, soit 30°.

La position du sommet O du réflecteur est celle du milieu du segment S-S0. L'orientation du réflecteur est donnée par celles de deux quelconques parmi les trois droites PR, PQ, PI dont les orientations sont respectivement celles des segments de droite S0-E, S0-F et S0-I.

En outre, la précision sur la localisation du centre de projection S0 est améliorée par une propriété supplémentaire : le centre S0 appartient aussi à la droite ST', liant la source S au point T', intersection des diagonales du quadrilatère projeté.

La présence des tiges noires permet de plus d'améliorer la localisation du point T', puisque ce point T' appartient aussi au segment joignant entre elles les extrémités des droites noires sur les côtés du contour.

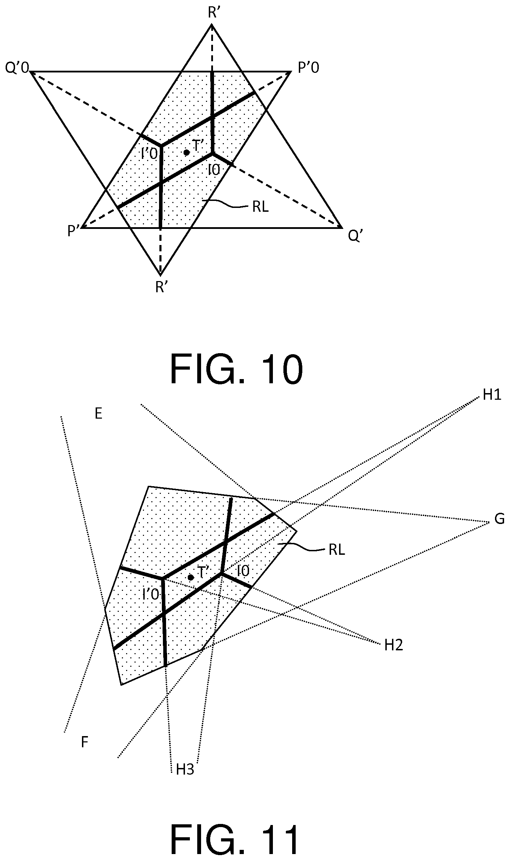

Pour une source à distance infinie, en champ angulaire central du réflecteur, et une orientation de la face d'entrée PQR du réflecteur parallèle au plan du capteur, on obtient, comme indiqué sur la figure 10,

- un reflet lumineux RL dont le contour est un hexagone à côtés parallèles entre eux deux à deux ;
- ce reflet est traversé par six ombres rectilignes aisément discriminables par rapport au fond lumineux ;
- ces six droites noires sont pour chacune sécantes à un côté de l'hexagone ;
- ces six droites noires sont distribuées selon deux groupes de trois droites « à terminaison commune » en deux points I' et I'0 ; ces deux points I' et I'0 sont les projections du centre I de la face d'entrée du réflecteur et de son symétrique par rapport au sommet O du réflecteur ;
- les trois droites noires d'un groupe sont individuellement parallèles aux 3 droites noires de l'autre groupe.
- le point T', centre de l'hexagone, est le centre de symétrie de la figure 10.

Dans le cas général où la source S est à distance finie, en champ angulaire central du réflecteur et l'orientation du réflecteur est quelconque par rapport au plan du capteur, on obtient, comme indiqué sur la figure 11,

- un reflet lumineux RL dont le contour est un hexagone quelconque ;
- ce reflet est traversé par six ombres rectilignes aisément discriminables par rapport au fond lumineux ;
- ces six droites noires sont chacune sécante à un côté de l'hexagone ;
- ces six droites noires sont distribuées selon deux groupes de trois droites « à terminaison commune » I' et I'0 qui sont respectivement les projections du centre I de la face d'entrée du réflecteur et de son symétrique par rapport au sommet O du réflecteur ;
- les trois points de fuite fournis par les droites noires sont les intersections de deux droites appartenant à deux groupes différents et sécantes à deux côtés opposés de l'hexagone ;
- le point T'est l'intersection commune entre

   ◦ les trois diagonales issues des sommets opposés de l'hexagone,
   ◦ le segment I'-I'0,
   ◦ les trois segments joignant les extrémités sur les côtés du contour de chacune des six droites noires deux à deux.

On recueille ainsi le point T' et six points de fuite qui sont les points E, F et G entre les droites portant les côtés opposés du contour hexagonal du reflet et H1, H2 et H3 entre les droites noires des deux groupes. Ils permettent de localiser S0 sur l'intersection commune :

- à six surfaces de révolution construites à partir des six couples de points (EF, FG, EG, H1 H2, H2H3, H1 H3) respectivement associées aux trois directions des côtés du triangle PQR et aux trois directions des tiges IP, IQ et IR, bissectrices du triangle,
- à la droite ST'.

L'orientation du réflecteur est donnée par deux quelconques des six droites reliant S0 à chacun des six points de fuite.

Une variante peut constituer, par exemple, à disposer les tiges issues de chaque sommet, de façon non coplanaire avec la face avant du réflecteur. Le cas d'un rétroréflecteur à contour hexagonal plan ou non ou à masque à contour hexagonal peut être traité de façon similaire en équipant chacun des six sommets d'une tige.

Le cas du réflecteur à masque en parallélogramme peut être traité de façon similaire en remplaçant les trois tiges issues des sommets du contour triangulaire du réflecteur par deux tiges issues de chaque sommet du masque en parallélogramme.

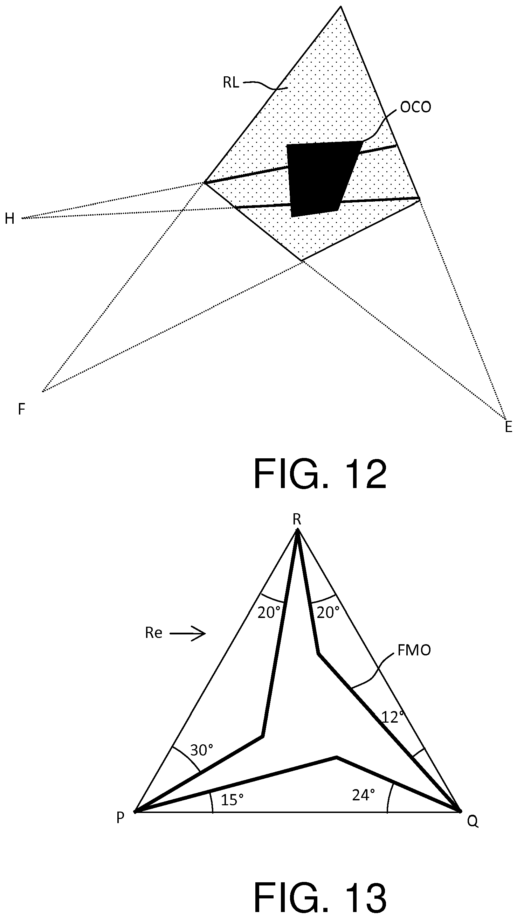

Le maillage à base de tiges occultantes devant le réflecteur peut fonctionner avec un écran occultant disposé devant la source S ou une épargne dans un miroir de renvoi, également disposé au niveau de la source S. A titre d'exemple, la figure 12 donne l'aspect du reflet RL obtenu avec un cache rectangulaire disposé au voisinage de la source et un masque en parallélogramme équipé de deux tiges occultantes selon ses diagonales. Les deux droites noires obtenues sont les ombres d'une seule de ces deux tiges, les deux ombres de la seconde tige n'apparaissent pas. On obtient au total :

- les deux points de fuite E et F du contour du reflet dû au masque ;
- le point de fuite H des deux ombres d'une des tiges ;
- les deux points de fuite non représentées des côtés de l'ombre centrale noire OCO de l'écran occultant fixe rectangulaire.

De façon générale, avec le dispositif à écran occultant fixe additionnel, dans un même reflet lumineux, on exploite ainsi deux sortes d'ombres différentes qui, bien que non séparées, sont faciles à distinguer les unes des autres par leur formes spécifiques :

- des ombres transversales monodimensionnelles,
- une ombre centrale bidimensionnelle à contour polygonal.

**Deuxième exemple : réflecteur en coin de cube avec cage à six tiges**

Dans ce deuxième exemple, on utilise le même rétroréflecteur Re en coin de cube que précédemment. On ajoute sur la face d'entrée PQR du réflecteur à face d'entrée triangulaire, six tiges rectiligne coplanaires FMO, issues de chaque sommet et « à terminaison commune » deux à deux à l'intérieur de la face avant triangulaire. Chaque couple de tiges forme ainsi avec un des côtés de la face d'entrée triangulaire plane un triangle, les trois triangles formés par les trois couples de fils étant tous différents. L'orientation des six tiges est telle que le birapport du faisceau de quatre droites concourantes sur chaque sommet de PQR est différent d'un sommet à l'autre.

La figure 13 représente cette disposition géométrique. Dans le cas de la figure 13, le birapport défini à partir du sinus des angles entre les quatre droites du faisceau, vaut par exemple en P :

$$r = [\sin(15°+15°)/\sin 15°] \, / \, [\sin(15 + 15° + 30°)/\sin(15°+ 30°)]$$

$$r = 1{,}577$$

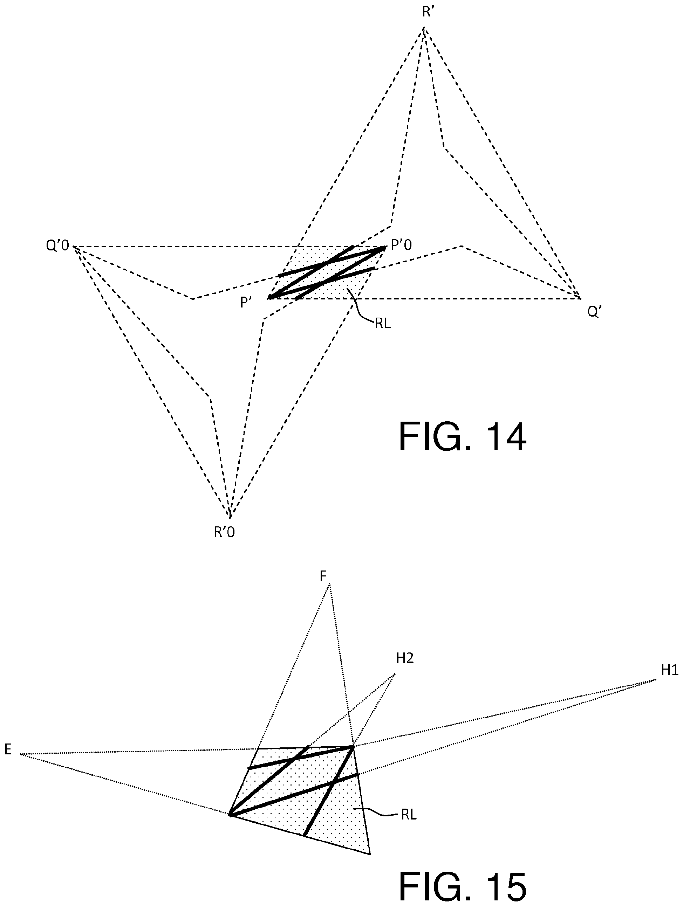

Pour une source S à distance infinie dont la direction est proche du bord de champ angulaire du réflecteur et pour un rétroréflecteur dont la face d'entrée est parallèle au plan du capteur, on obtient, comme indiqué sur la figure 14 :

- un reflet lumineux RL dont le contour est un parallélogramme,
- ce reflet est traversé par quatre ombres rectilignes,

  ◦ parallèles deux à deux et aisément discriminables par rapport au fond lumineux,
  ◦ concourantes sur deux sommets opposés du contour lumineux en parallélogramme.

La valeur commune du birapport de chacun des faisceaux de quatre directions concourantes donne celui, parmi les trois sommets P, Q ou R dont les images sont ces deux sommets.

Dans le cas général où la source est à distance finie dont sa direction est proche du bord de champ angulaire et dont l'orientation du réflecteur est quelconque par rapport au plan du capteur, on obtient, comme indiqué sur la figure 15:

- un reflet lumineux RL dont le contour est un quadrilatère à côtés non parallèles,
- ce reflet est traversé par quatre ombres rectilignes non parallèles aisément discriminables par rapport au fond lumineux,
- ces quatre droites noires sont concourantes deux à deux sur deux sommets opposés du quadrilatère.

La valeur commune du birapport de chacun des deux faisceaux constitués de quatre directions concourantes, deux droites noires et deux côtés du quadrilatère lumineux donne celui des trois sommets P, Q ou R dont les images projetées sont ces deux sommets opposés du quadrilatère.

On recueille ainsi quatre points de fuite qui sont respectivement les points E, F intersections des droites portant les côtés du reflet et les points H1 et H2 intersections des quatre droites noires deux à deux.

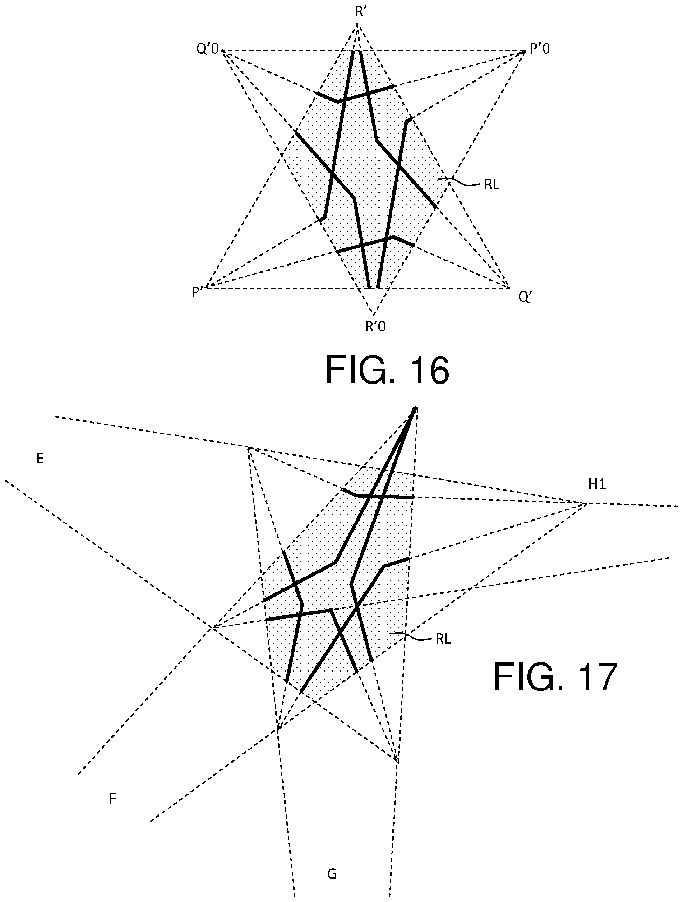

Pour une source à distance infinie dont la direction est proche du centre du champ angulaire du réflecteur et dont l'orientation de la face d'entrée PQR du réflecteur est parallèle au plan du capteur, on obtient, comme indiqué sur la figure 16 :

- un reflet lumineux RL dont le contour est un hexagone à côtés parallèles entre eux deux à deux ;
- ce reflet est traversé par douze ombres rectilignes aisément discriminables par rapport au fond lumineux ;
- ces douze droites noires sont chacune sécante à un côté de l'hexagone lumineux ;
- ces douze droites noires sont distribuées selon deux groupes de six droites à « terminaison commune » deux à deux selon six points intérieurs au reflet hexagonal ;
- les six droites noires d'un groupe sont individuellement parallèles aux six droites noires de l'autre groupe,
- les prolongements des deux droites noires qui coupent un même côté de l'hexagone et les deux prolongements des deux cotés voisins sont concourants en un même point extérieur à l'hexagone. Ils forment en ce point un faisceau de quatre droites dont la valeur du birapport permet d'identifier parmi les trois sommets P, Q ou R celui dont ce sommet est l'image par projection.

Dans le cas général où la source est à distance finie et où l'orientation du réflecteur est quelconque par rapport au plan du capteur, on obtient, comme représenté en figure 17 :

- un reflet lumineux RL dont le contour est un hexagone quelconque,
- ce reflet est traversé par douze ombres rectilignes aisément discriminables par rapport au fond lumineux,
- ces douze droites noires sont chacune sécante à un côté de l'hexagone,
- ces douze droites noires sont distribuées selon deux groupes de six droites à « terminaison commune » deux à deux selon six points intérieurs au reflet hexagonal,

- les prolongements des deux droites noires qui coupent un même côté de l'hexagone et les prolongements des deux cotés voisins à ce côté, sont concourants en un même point. Ils forment en ce point un faisceau de quatre droites dont la valeur du birapport permet d'identifier parmi les trois sommets P, Q ou R celui dont ce sommet est l'image,
- les six points de fuite fournis par les six couples de droites noires constitués de droites qui

  ○ appartiennent à deux groupes différents,
  ○ sont sécantes à deux côtés opposés de l'hexagone,
  ○ sont sécantes sur les extrémités opposées de ces deux côtés opposés.

On recueille au total neuf points de fuite :

- les trois points E, F et G, points de concours entre les droites portant les côtés opposés du contour hexagonal du reflet,
- les six points H1 à H6, seul H1 est repéré sur la figure 17, points de concours entre les six couples de droites noires.

**Premier exemple de réalisation : réflecteur sphérique en cage rectiligne**

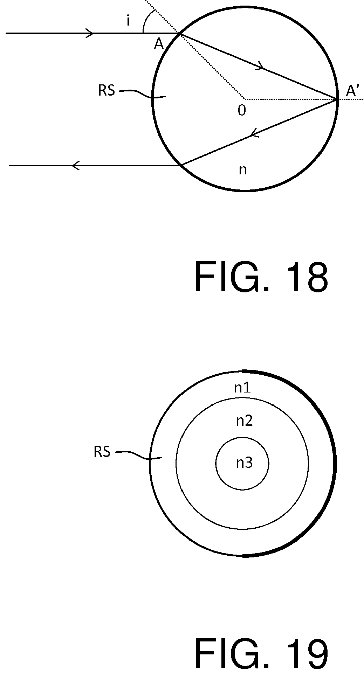

Le réflecteur en coin de cube décrit précédemment est remplacé par un réflecteur sphérique RS. En effet, comme on voit sur la figure 18, pour une sphère transparente de centre O, placée dans l'air, un rayon incident en A, réfléchi en A' émerge de la sphère en A" dans la direction symétrique du rayon incident par rapport au centre O, si :

- pour un angle d'incidence i faible, l'indice n de la sphère vaut 2,
- quand l'incidence augmente, l'indice n diminue selon une loi spécifique jusqu'à $2^{0,5}$.

Pour se rapprocher de ces conditions, plusieurs techniques sont possibles. On citera la réalisation de sphères à gradient d'indice ou de sphères à sauts d'indice représentée en coupe en figure 19. Ces réalisations sont rapportées par plusieurs auteurs. On trouvera des informations complémentaires sur de telles réalisations dans les documents suivants : Oakley JP. 2007. « Whole-angle spherical rétro reflector using concentric layers of homogenous optical média » Appl. Optic Vol.46, No7 p1026-1031 - Anheier NC et al., Februray 2009 "FY 2008 Miniature Spherical Retroreflectors - Final Report" , Pacific North West National Laboratory - 18344 et Handerek, Laycock, "Retroreflective device comprising gradient index lenses", US patent, US 2006/0109561.

Si, de plus, on limite l'orientation du rayonnement incident de façon à n'utiliser qu'un seul hémisphère en réflexion, ce dernier peut alors recevoir un traitement réfléchissant représenté en gras sur la figure 19 pour maximiser l'intensité réfléchie. L'orientation du rayonnement incident par rapport à la normale au plan de séparation des deux hémisphères est alors inférieur à 90°, soit un angle solide de $2\pi$ sr autour de cette normale au plan.

On peut calculer la position d'un reflet donné par une source ponctuelle S par rétroréflexion sur une sphère rétrofléchissante telle qu'elle vient d'être définie.

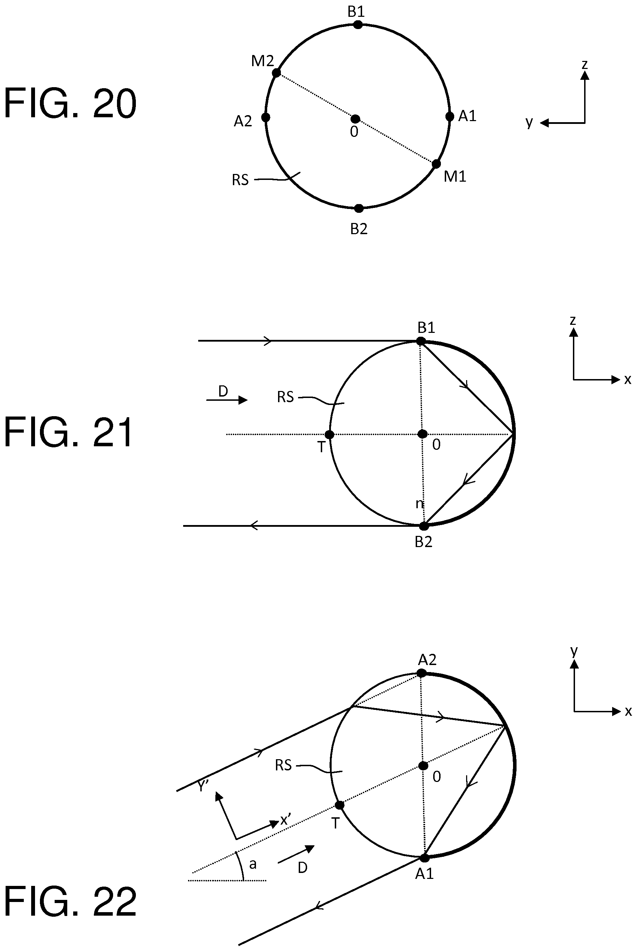

On définit un repère trirectangle Oxyz associé au rétroréflecteur sphérique RS transparent /réfléchissant de centre O et de rayon R. Il est indiqué sur les figures 20 à 22 qui représentent trois coupes de la sphère dans les plans respectifs (y, z), (x, z) et (x, y). Ce repère est constitué comme suit :

- Axe Ox : normale au plan virtuel de séparation entre l'hémisphère avant transparent et l'hémisphère arrière réfléchissant. L'axe Ox est horizontal sur les figures 20 à 22 ;
- Axe Oy : axe contenu dans le plan de séparation. L'axe Oy est également horizontal sur les figures 20 à 22 ;
- Axe Oz : axe contenu dans le plan de séparation. L'axe Oz est vertical sur les figures 20 à 22 ;

Les points A1, B1, A2, B2 représentés sur ces figures servent à repérer l'orientation des axes Oy et Oz de séparation des deux hémisphères.

La présence du revêtement réfléchissant sur l'hémisphère arrière a pour conséquence que la pupille d'entrée et la pupille de sortie du réflecteur sont identiques et leur contour est le cercle central passant par les points A1, B1, A2 et B2.

Si la source S est à l'infini dans la direction D, qui est par exemple parallèle au plan horizontal xOy et pivotée de l'angle a par rapport à l'axe Ox. Le point T est l'intersection sur la sphère du rayon de direction D issu de O.

Dans le plan horizontal xOy de la figure 22, la partie du faisceau de direction D qui est réfléchie par la sphère est délimitée sur la sphère par :

- le rayon limite qui passe à travers l'hémisphère transparent, c'est-à-dire celui qui passe par le point A1, un des points limite de l'hémisphère transparent ;

- le rayon symétrique du précédent par rapport à O, c'est-à-dire le rayon issu du point A2, symétrique de A1 et donc diamétralement opposé horizontalement à A1.

Dans le plan vertical zOx de la figure 21, la partie du faisceau de direction D qui est réfléchie par la sphère est délimitée sur la sphère par les deux points diamétralement opposés verticalement B1 et B2.

De façon générale, comme on le voit sur la figure 20, un rayon quelconque du faisceau cylindrique incident de direction D qui passe par un point M1 du cercle de séparation A1-B1-A2-B2 a pour rayon réfléchi, un rayon de même direction D qui passe par le point M2 diamétralement opposé. Le contour du faisceau réfléchi est donc un cylindre de directrice D qui s'appuie obliquement sur ce cercle de séparation. Le contour du reflet produit sur un plan de projection est:

- soit un cercle de même rayon R que la sphère, quand le plan de projection est parallèle au plan zOy du cercle de séparation,
- soit, dans le cas général, une ellipse dont les deux paramètres caractéristiques que constituent, par exemple, la direction de son grand axe et son excentricité dépendent des deux paramètres qui définissent l'orientation du plan de projection.

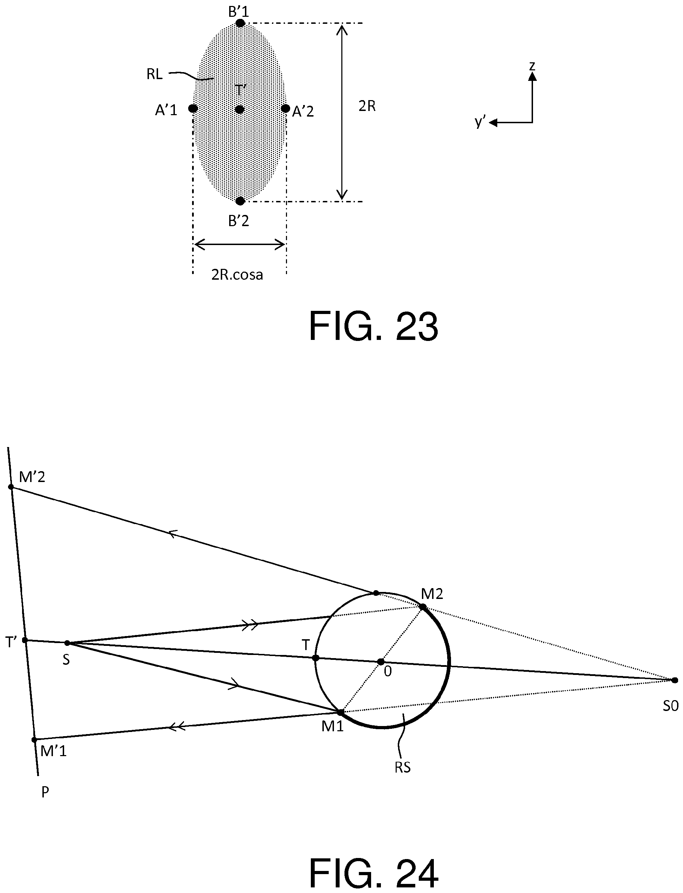

Par exemple, pour un plan de projection vertical, perpendiculaire à D, et d'axe horizontal y', le reflet RL de contour elliptique est représenté sur la figure 23. Les extrémités du grand axe de longueur 2R sont les projections B'1 et B'2 des points B1 et B2 du réflecteur. Les extrémités du petit axe de longueur 2R.cosa sont les projections A'1 et A'2 des points A1 et A2 du réflecteur. Le centre est le point T', projection de T.

Le contour du reflet est insuffisant pour déterminer à lui seul les six inconnues de position et d'orientation de la sphère. Il ne fournit en effet que cinq paramètres : les coordonnées de son centre, la longueur de chacun des deux axes et l'orientation d'un axe.

Le cas où la source est à distance finie est représenté sur la figure 24. Celle-ci représente une vue en coupe du réflecteur RS et du plan P de projection, selon le plan qui contient les points S, O et un point M1 appartenant au cercle de séparation des deux hémisphères , les images par le réflecteur des rayons portés par les directions S-M1 et S-M2 sont respectivement les rayons portés par les directions S0-M2 et S0-M1.

La source S et son image S0 par le réflecteur sont symétriques par rapport au centre O du réflecteur. L'image réfléchie de tout point M1 du cercle de séparation des deux hémisphères est le point M2 diamétralement opposé. L'image réfléchie du cercle de séparation des deux hémisphères éclairé par S est produite par S0 qui éclaire ce cercle.

On démontre que :

- quelles que soient la position et l'orientation du réflecteur, cette image réfléchie est produite par la projection de centre S0 sur un plan P fixe proche de S et portant le capteur d'images,
- la dimension maximale de l'image est environ deux fois celle de la pupille circulaire de rayon R que constitue le cercle de séparation des deux hémisphères,
- le point T' projeté de S et de T est aligné avec les projetés M'1 et M'2 des points M1 et M2.

Le contour du reflet RL est une ellipse dont la forme dépend de l'orientation relative de ce plan P de projection par rapport au plan de séparation des deux hémisphères.

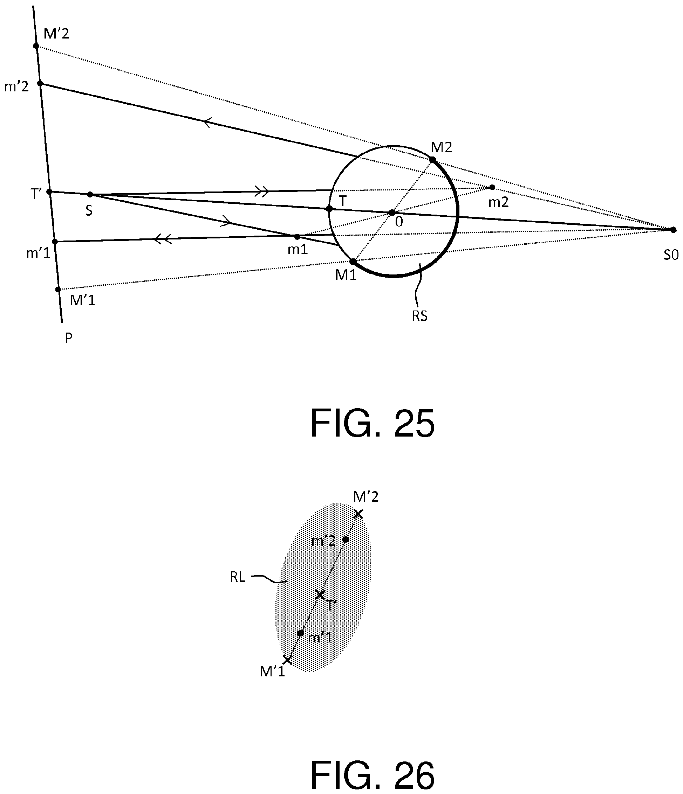

La figure 25, représente, dans le plan de coupe selon le plan S-O-M1-M2, pour un élément opaque ponctuel m1 quelconque à l'intérieur du secteur angulaire lumineux M1-S-M2, les positions des deux ombres projetées m'1 et m'2 :

- l'ombre m'2 est générée par m1 avant réflexion sur un rayon issu directement de S, rayon 1 flèche sur la figure 25,
- l'ombre m'1 est générée par m1 sur un rayon réfléchi qui provient du rayon issu directement de S, rayon 2 flèches sur la figure 25 selon la direction Sm2, avec m2 symétrique virtuel de m1.

La figure 26 représente le reflet elliptique RL projeté et les deux ombres m'1 et m'2 générées par m1 à l'intérieur du reflet.

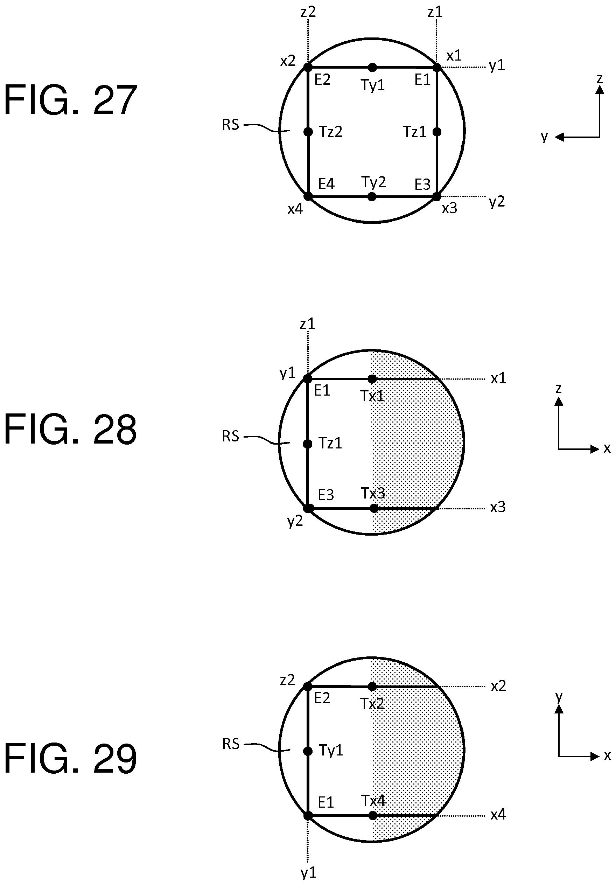

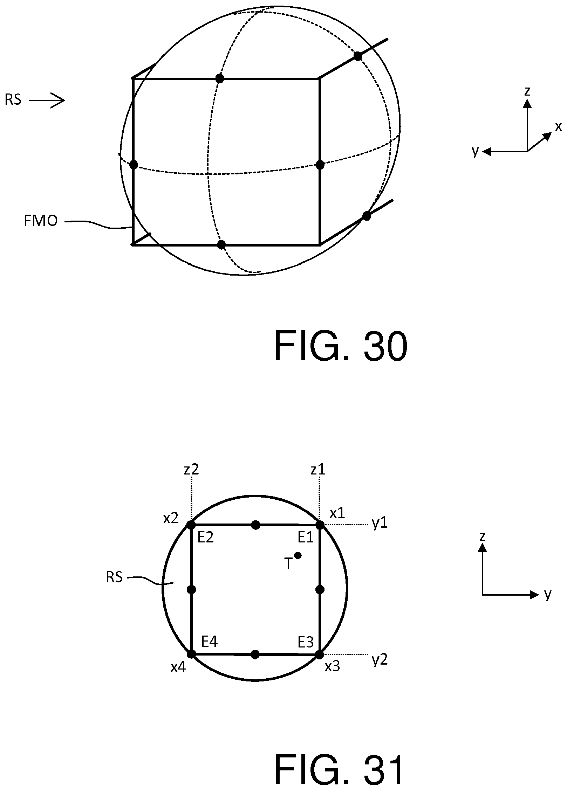

Comme on l'a vu, le contour du reflet est insuffisant pour déterminer à lui seul les six inconnues de position et d'orientation de la sphère. Aussi, on ajoute autour de sphère un maillage filaire FMO. Dans un premier exemple de réalisation, le réflecteur sphérique Re comporte une cage constituée de huit tiges rectilignes FMO disposées selon les arêtes d'un cube centré sur la sphère. Ce maillage est représenté sur les figures 27 à 30 qui représentent le maillage selon trois plans différents perpendiculaires entre eux, la figure 30 représentant une vue en perspective dudit maillage. Il est défini comme suit :

- la sphère de rayon R est tangente à chaque arrête du cube au milieu de celle-ci ;
- les arêtes du cube sont parallèles aux axes Ox, Oy et Oz du réflecteur sphérique ;

- Dans ces conditions, la longueur de chaque arête vaut R.2$^{0,5}$;
- La cage est constituée de huit tiges, concourantes trois à trois :

  o Deux tiges frontales horizontales selon Oy, d'axes y1 et y2, tangentes à la sphère en leurs milieux Ty1 et Ty2 comme représenté sur la figure 27 ;
  o deux tiges frontales verticales selon Oz, d'axes z1 et z2, tangentes à la sphère en en leurs milieux Tz1 et Tz2, comme représenté sur la figure 27 ;
  o quatre tiges latérales horizontales selon Ox, d'axes x1, x2, x3, x4, tangentes à la sphère en Tx1, Tx2, Tx3, Tx4 sur le cercle de séparation des deux hémisphères, comme représenté sur les figures 28 et 29 ;

Les quatre sommets du cube devant l'hémisphère transparent sont E1, E2, E3 et E4, individuellement points de concours de trois tiges perpendiculaires entre elles. La figure 30 est une vue en perspective cavalière, projection oblique à l'infini sur le plan vertical yOz. Elle représente :

- le contour de la surface de la sphère supposée entièrement opaque pour plus de clarté, de plus le traitement réfléchissant arrière n'est pas figuré ;
- les trois lignes d'intersection en pointillés entre la surface de la sphère assimilée au globe terrestre et les plans du trièdre Oxyz,

  ∘ le plan« équatorial» selon xOy, Oz est supposé être l'axe « polaire »,
  ∘ le plan « méridien» selon zOx,
  ∘ le plan « méridien» selon zOy séparant les deux hémisphères avant et arrière,

- les huit tiges de la cage avec,

  ∘ l'occultation partielle par la sphère de deux des quatre tiges latérales horizontales, à savoir x2 et x4 ;
  ∘ les six points visibles de tangence des tiges avec la sphère, parmi les huit existants.

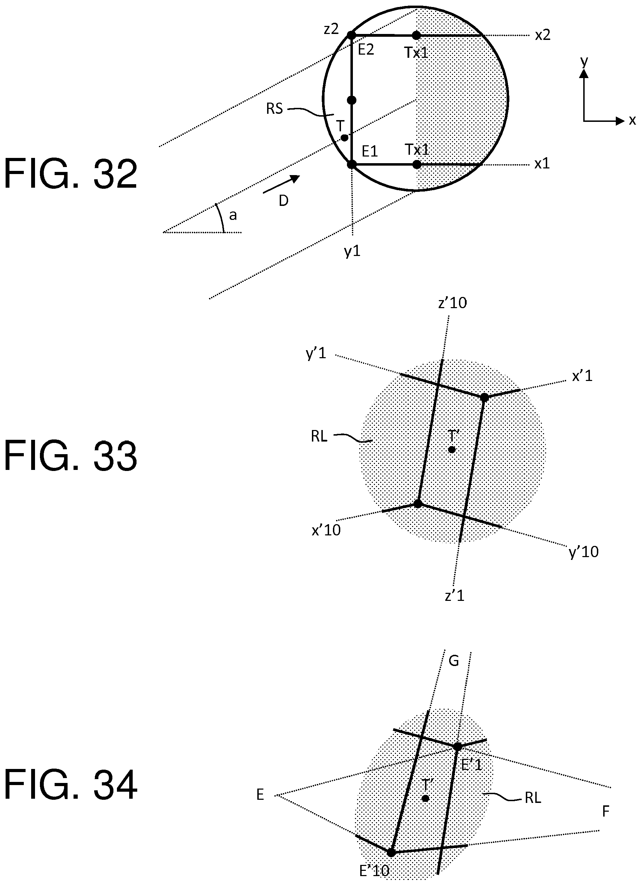

Les figures 31 et 32 représentent l'impact des rayons lumineux issus d'une source S située à l'infini sur la sphère réfléchissante RS. Ces figures représentent deux vues dans les mêmes plans que celles des figures 27 et 29. Le point T donne la direction D de la droite SO reliant la source S et le centre O de la sphère. La direction D de cet axe SO est pivotée de l'angle a par rapport à l'axe Ox. Pour cette incidence, les axes z2 et y2 ne sont plus visibles en réflexion. Seules sont visibles des fractions de chacun des trois axes concourants en E1 : x1, y1, z1.

La figure 33 représente pour une source à l'infini, le reflet RL à contour circulaire sur le plan du capteur, dans le cas particulier où celui-ci est parallèle au plan zOy. Les images projetées des axes et des sommets sont symétriques par rapport à la projection T' de T.

Par convention d'écriture, sur cette figure, les deux reflets projetés d'un élément réel M quelconque sont notés respectivement M'et M'0. Ainsi, par exemple, les deux reflets projetés de la tige x1 sont x'1 et x'10.

La figure 34 représente le reflet RL à contour elliptique obtenu dans le cas d'une source à distance fine pour une orientation quelconque du plan de capteur. Les trois tiges d'axes x1, y1, z1 concourantes en E1 et perpendiculaires entre elles produisent par projection six droites noires concourantes 3 par 3 en E'1 et E'10. Ces six droites noires fournissent trois points de fuite E, F et G. Ce reflet fournit treize paramètres :

- les six paramètres que constituent les coordonnées des trois points de fuite,
- les deux paramètres que constituent les coordonnées du point T', intersection des diagonales du quadrilatère projeté,
- les cinq paramètres qui caractérisent le contour elliptique du reflet, c'est-à dire, par exemple, les coordonnées de son centre différent de T', les longueurs des deux axes et l'orientation du grand axe.

Les huit premiers paramètres fournissent position et orientation du réflecteur, comme indiqué précédemment :

- le centre de projection S0 recherché est le point de concours commun des trois sphères de diamètres respectifs EF, EG, FG et de la droite ST'. Le centre O recherché est le milieu du segment S-S0,
- les orientations inconnues des trois tiges concurrentes en E1, à savoir x1, y1 et z1, sont respectivement celles des trois segments de droite S0-E, S0-F et S0-G.

Les cinq derniers paramètres ajoutent de la redondance au système contraint.

Selon la direction et la distance de la source par rapport au réflecteur, plusieurs types de reflet sont produits.

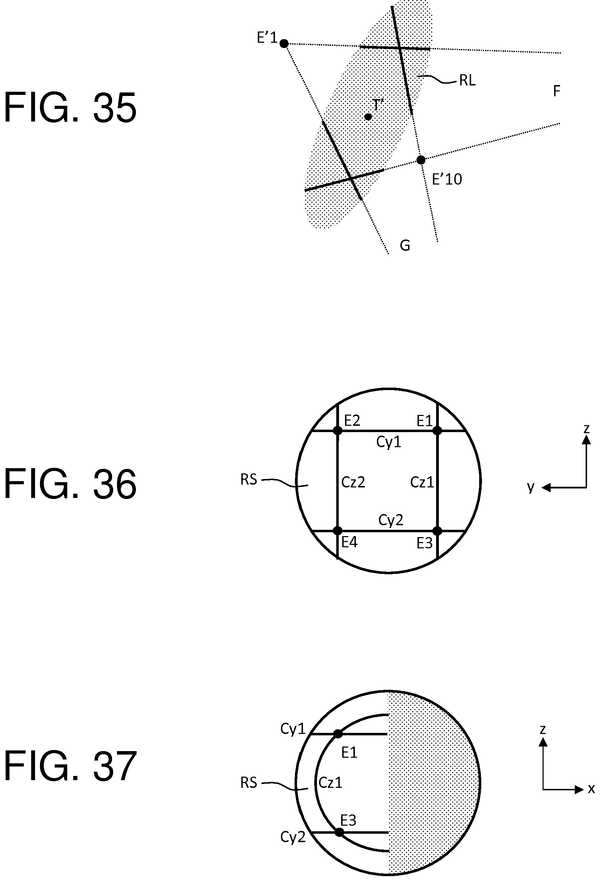

- Quand la source est en périphérie du champ angulaire du réflecteur, le reflet peut ne comporter aucun sommet, mais seulement deux couples de deux droites non parallèles comme on le voit sur la figure 35, le centre S0 est alors à l'intersection de la sphère de diamètre GF et de la droite ST' avec T' point de concours des diagonales du quadrilatère projeté reconstitué ;
- Quand la source est en périphérie du champ angulaire du réflecteur, le reflet peut ne comporter aucun sommet, mais seulement deux droites non parallèles, ne générant ainsi qu'un point de fuite. Cet inconvénient peut être contourné en ajoutant des tiges en bord de champ, par exemple un contour de tiges parallèles au plan yOz, à proximité et en avant de ce plan ;
- Quand la source est au centre du champ angulaire du réflecteur, au moins deux sommets de la cage peuvent être simultanément reflétés, générant ainsi dans le reflet au moins douze droites concurrentes en quatre points et six points de fuite.

Pour des applications de détection de posture de casque utilisées notamment en aéronautique, l'hémisphère réfléchissant peut être intégralement intégré dans la coque d'un casque. Les tiges latérales horizontales x1 à x4 peuvent être raccourcies jusqu'à leurs points de tangence Tx1 à Tx4 ou n'être que partiellement raccourcies et intégrées dans la coque.

D'autres formes de cage à tiges rectilignes sont bien entendu utilisables, elles peuvent notamment être constituées de tiges concourantes non par trois, mais seulement par deux ou n'avoir aucun point de tangence avec la sphère du réflecteur.

**Deuxième exemple de réalisation : réflecteur sphérique et maillage curviligne**

Dans une variante de réalisation du rétroréflecteur précédent, le maillage filaire FMO est directement déposé sur la sphère réfléchissante RS. Plus précisément, on dépose sur la surface de la sphère quatre fils en demi-cercles ou un traitement opaque fin, comme représenté sur les figures 36, 37, 38 qui représentent trois vues de la sphère dans les plans respectifs (y, z), (x, z) et (x, y). La sphère comporte donc :

- deux fils Cz1 et Cz2 situés sur deux plans verticaux parallèles à zOx et symétriques l'un de l'autre par rapport au centre O ;
- deux fils Cy1 et Cy2 situés sur deux plans horizontaux parallèles à yOx et symétriques l'un de l'autre par rapport au centre O ;

Ces quatre demi-cercles sont sécants deux à deux en E1, E2, E3 et E4.

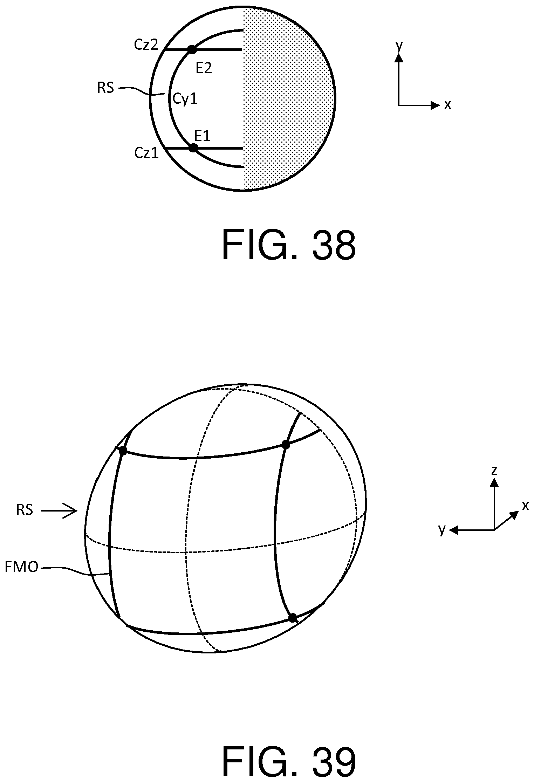

La figure 39 est une vue en perspective cavalière, c'est-à-dire une projection oblique à l'infini sur le plan vertical yOz. Elle représente :

- le contour de la surface de la sphère RS supposée entièrement opaque pour plus de clarté. De plus, le traitement réfléchissant arrière n'est pas figuré,
- les trois lignes d'intersection en pointillés de la surface de la sphère assimilée au globe terrestre avec les plans du trièdre Oxyz qui sont :

  o le plan « équatorial » selon xOy. Oz est supposé être l'axe « polaire »,
  o le plan« méridien » selon zOx ,
  o le plan « méridien » selon zOy, séparant les deux hémisphères avant et arrière,

- les quatre fils en demi-cercle de la maille FMO avec,

  o l'occultation partielle par la sphère de deux des quatre fils, à savoir Cy2 et Cz2,
  o les trois, parmi les quatre points visibles d'intersections entre les fils deux à deux à, à savoir les points E1, E2 et E3.

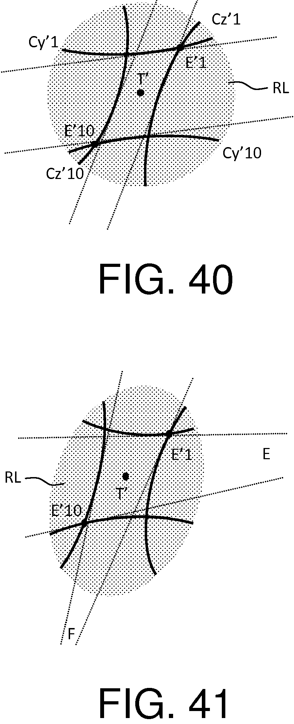

La figure 40 représente pour une source à l'infini, le reflet RL à contour circulaire sur le plan du capteur, dans le cas particulier où celui-ci est parallèle au plan zOy. La direction D de la droite liant le centre O à la source S et donné par un point T sur la sphère supposé proche d'E1.

Pour cette incidence, les demi-cercles Cz2 et Cy2 ne sont plus visibles en réflexion. Seuls sont visibles les arcs de chacun des deux demi-cercles Cy1 et Cz1 et leur intersection E1.

Les images projetées Cy'1, Cz'1, Cy'10, Cz'10 et E'1, E'10 des arcs de cercle Cy1 et Cz1 et de leur intersection E1, sont symétriques par rapport T', projection de T et de O; les tangentes aux points d'intersection des ellipses sont parallèles entre elles.

La figure 41 représente le reflet RL à contour elliptique obtenu dans le cas général, pour une orientation quelconque du plan de capteur et pour une source à distance finie.

Les deux fils en demi-cercle Cy1 et Cz1 concourants en E1 et perpendiculaires entre eux, fournissent quatre arcs d'ellipses noires concourantes deux par deux en E'1 et E'10. Ces quatre arcs d'ellipses noires fournissent deux points de fuite E et F qui sont les intersections des tangentes aux ellipses aux points E'1 et E'10.

Ce reflet fournit onze paramètres :

-   les quatre paramètres que constituent les coordonnées des 2 points de fuite E et F,
-   les deux paramètres que constituent les coordonnées de T,' point de concours des diagonales du quadrilatère dont les sommets sont les points de concours des arcs d'ellipses noires, tels que les points E'10 et E'1,
-   les cinq paramètres qui caractérisent le contour elliptique du reflet, c'est-à-dire, par exemple, les coordonnées de son centre, différent du point T', les longueurs des deux axes et l'orientation du grand axe.

Les six premiers paramètres fournissent position et orientation du réflecteur, comme indiqué précédemment. Le centre de projection S0 recherché est à l'intersection de la sphère de diamètre EF et de la droite ST'. Les orientations inconnues des deux tangentes en E1 aux fils demi-circulaires Cy1 et Cz1, qui donnent l'orientation du réflecteur, sont respectivement celles des deux segments de droite S0-E et S0-F.

Les cinq derniers paramètres ajoutent de la redondance au système contraint.

Les paramètres qui caractérisent les quatre ellipses reconstituées à partir des quatre arcs d'ellipses noires ajoutent également de la redondance au système contraint.

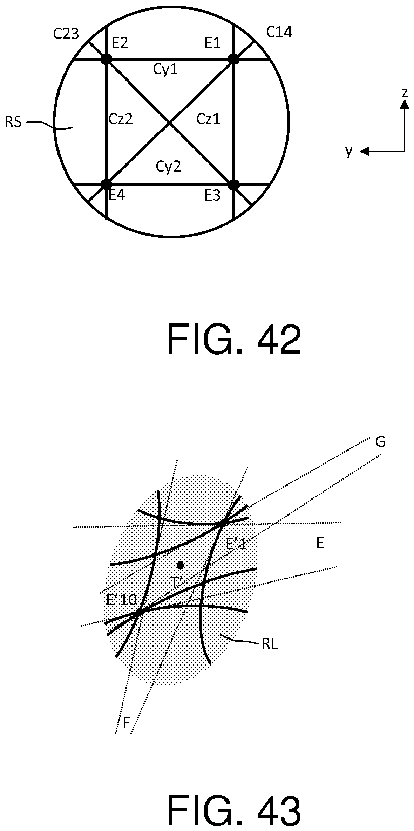

Pour augmenter la précision au rétroréflecteur précédent, on peut, par exemple, ajouter des fils au maillage sur la sphère comme indiqué sur la figure 42 où deux demi-cercles obliques C14 et C23 passant par les points E1 et E4 pour C14, et par les points E2 et E3 pour C23 ont été ajoutés.

On obtient ainsi un troisième point de fuite dans le reflet RL comme on le voit sur la figure 43. Ce point de fuite correspond à l'intersection des deux tangentes en E'1 et E'10 aux deux nouveaux arcs d'ellipses projetées. Ce point de fuite correspond à la direction de la tangente au demi-cercle C14 au point E1.

Les six coordonnées des trois points de fuite fournissent position et orientation du réflecteur, en appliquant les propriétés détaillées précédemment :

-   le centre de projection S0 recherché est le point des concours commun à la droite ST' et aux trois surfaces de révolution suivantes :

    o la sphère de diamètre EF qui est un tore particulier pour A=90°,
    o deux tores d'axes EG et GF, centrés sur les milieux de ces segments,

-   le centre O recherché est le milieu du segment S-S0,
-   l'orientation du réflecteur est donnée par les orientations de deux des trois droites tangentes en E1 aux trois fils demi-circulaires Cy1, Cz1 et C14, ces orientations sont celles des trois segments de droite S0-E, S0-F et S0-G.

Les avantages principaux du système de détection de la posture d'un objet mobile selon l'invention sont :

-   La simplicité du dispositif fixe de détection. Le dispositif selon l'invention ne comporte qu'un seul capteur d'images, Il peut fonctionner sans écran fixe et sans épargne dans un miroir de renvoi. Le rétroréflecteur ne comporte aucun marquage spécifique ;
-   la simplicité du dispositif disposé sur l'objet mobile qui ne comporte qu'un rétroréflecteur de forme simple ;
-   la facilité de détection qui consiste à détecter des ombres filiformes dans un reflet donné par le rétroréflecteur ;
-   La précision de mesure ;
-   l'absence de parasitage par l'éclairement solaire dans la mesure où le système fonctionne par rétroréflexion ;
-   La tolérance aux défauts de mesure obtenue grâce à la redondance du maillage filaire disposé sur le rétroréflecteur ;
-   L'obtention d'un grand champ de mesure obtenu avec un seul rétroréflecteur, les dispositifs mettant en oeuvre un rétroréflecteur sphérique où le champ atteint $2\pi$ stéradians.

## Revendications

**1.** Système de détection de la posture d'un objet mobile dans l'espace comprenant

- un dispositif fixe électro-optique d'orientation connue comprenant au moins une source d'émission (S), un capteur d'images et des moyens d'analyse d'images, et
- un ensemble optique comprenant au moins un rétroréflecteur (Re, RS) optique disposé sur l'objet mobile,

**caractérisé en ce que** :

- le rétroréflecteur optique est une sphère optique (RS) d'indice variable comportant un hémisphère transparent et un hémisphère réfléchissant tel qu'un rayon lumineux, réfracté par l'hémisphère transparent, réfléchi par l'hémisphère réfléchissant et réfracté une seconde fois par l'hémisphère transparent ressorte parallèlement à sa direction d'incidence.
- le rétroréflecteur optique (RS) comporte un maillage (FMO) comportant au moins trois fils opaques, d'épaisseur faible et d'agencement géométrique connu ;
- l'image du rétroréflecteur éclairé par la source forme un reflet (RL) sur le capteur d'images, ledit reflet comportant au moins les deux images de l'ombre d'un des trois fils par le rétroréflecteur ;
- les moyens d'analyse d'image détectent au moins l'orientation de la ligne de fuite donnée par les dites images, ladite orientation étant représentative d'un premier paramètre de la posture de l'objet mobile.

2. Système de détection de la posture d'un objet mobile selon la revendication 1, **caractérisé en ce que** les moyens d'analyse détectent la forme du reflet, ladite forme étant représentative d'au moins un second paramètre de la posture de l'objet mobile.

3. Système de détection de la posture d'un objet mobile selon la revendication 1, **caractérisé en ce que** le maillage des fils (FMO) comporte huit fils droits de longueur égale, quatre premiers fils formant un carré et quatre seconds fils étant parallèles entre eux, perpendiculaires au plan du carré, une des extrémités des quatre seconds fils étant confondue avec une des extrémités des quatre premiers fils.

4. Système de détection de la posture d'un objet mobile selon la revendication 1, **caractérisé en ce que** le maillage des fils (FMO) comporte quatre fils semi-circulaires de forme identique, deux premiers fils étant disposés dans deux premiers plans parallèles symétriquement par rapport au centre de la sphère, deux seconds fils étant disposés dans deux seconds plans parallèles symétriquement par rapport au centre de la sphère, les deux seconds plans étant perpendiculaires aux deux premiers plans.

5. Système de détection de la posture d'un objet mobile selon la revendication 4, **caractérisé en ce que** le maillage (FMO) comporte des troisièmes fils semi-circulaires de forme identique coupant obliquement les premiers fils et/ou les seconds fils.

6. Système de détection de la posture d'un objet mobile selon la revendication 1, **caractérisé en ce que** le contour du reflet (RE) est une ellipse inclinée, l'inclinaison de l'ellipse, les longueurs du grand et du petit axe étant représentative de paramètres de la posture de l'objet mobile.

7. Casque de pilote, **caractérisé en ce qu'**il comporte au moins un rétroréflecteur optique destiné à fonctionner dans un système de détection de la posture d'un objet mobile selon l'une des revendications précédentes.

**Patentansprüche**

1. System zum Erkennen der Haltung eines beweglichen Objekts im Raum, das Folgendes umfasst:

- ein festes elektrooptisches Gerät mit bekannter Orientierung, das wenigstens eine Emissionsquelle (S), einen Bildsensor und Bildanalysemittel umfasst; und
- eine optische Baugruppe, die wenigstens einen optischen Retroreflektor (Re, RS) umfasst, der an dem beweglichen Objekt angeordnet ist,

**dadurch gekennzeichnet, dass**:

- der optische Retroreflektor eine optische Sphäre (RS) mit einem variablen Index ist, die eine transparente Hemisphäre und eine reflektierende Hemisphäre umfasst, wie einen Lichtstrahl, der durch die transparente Hemisphäre gebrochen und durch die reflektierende Hemisphäre reflektiert wird und, wenn er ein zweites Mal durch die transparente Hemisphäre gebrochen wird, parallel zu seiner Einfallsrichtung austritt;
- der optische Retroreflektor (RS) ein Geflecht (FMO) umfasst, das wenigstens drei opake, dünne Drähte einer bekannten geometrischen Anordnung umfasst;
- das Bild des von der Quelle beleuchteten Retroreflektors eine Reflexion (RL) auf dem Bildsensor bildet, wobei die Reflexion wenigstens die zwei Bilder des Schattens von einem der drei Drähte durch den Retroreflektor umfasst;
- die Bildanalysemittel wenigstens die Orientierung der durch die Bilder gegebenen Fluchtlinie erkennen, wobei die Orientierung einen ersten Parameter der Haltung des beweglichen Objekts repräsentiert.

2. System zum Erkennen der Haltung eines beweglichen Objekts nach Anspruch 1, **dadurch gekennzeichnet, dass** die Analysemittel die Form der Reflexion erkennen, wobei die Form wenigstens einen zweiten Parameter der Haltung des beweglichen Objekts repräsentiert.

3. System zum Erkennen der Haltung eines beweglichen Objekts nach Anspruch 1, **dadurch gekennzeichnet, dass** das Drahtgeflecht (FMO) acht gerade Drähte von gleicher Länge umfasst, vier erste Drähte, die ein Quadrat bilden, und vier zweite Drähte, die parallel zueinander sind, lotrecht zur Ebene des Quadrats, wobei eines der Enden der vier zweiten Drähte mit einem der Enden der vier ersten Drähte zusammenfällt.

4. System zum Erkennen der Haltung eines beweglichen Objekts nach Anspruch 1, **dadurch gekennzeichnet, dass** das Drahtgeflecht (FMO) vier halbkreisförmige Drähte von identischer Form umfasst, zwei erste Drähte, die in zwei ersten Ebenen symmetrisch parallel relativ zur Mitte der Sphäre angeordnet sind, zwei zweite Drähte, die in zwei zweiten Ebenen symmetrisch parallel relativ zur Mitte der Sphäre angeordnet sind, wobei die zwei zweiten Ebenen lotrecht zu den zwei ersten Ebenen sind.

5. System zum Erkennen der Haltung eines beweglichen Objekts nach Anspruch 4, **dadurch gekennzeichnet, dass** das Geflecht (FMO) dritte halbkreisförmige Drähte von identischer Form umfasst, die die ersten Drähte und/oder die zweiten Drähte schräg schneiden.

6. System zum Erkennen der Haltung eines beweglichen Objekts nach Anspruch 1, **dadurch gekennzeichnet, dass** die Kontur der Reflexion (RE) eine geneigte Ellipse ist, wobei die Neigung der Ellipse, die Längen der großen und der kleinen Achse Parameter der Haltung des beweglichen Objekts repräsentieren.

7. Pilotenhelm, **dadurch gekennzeichnet, dass** er wenigstens einen optischen Retroreflektor zum Arbeiten in einem System zum Erkennen der Haltung eines beweglichen Objekts nach einem der vorherigen Ansprüche umfasst.

**Claims**

1. A system for detecting the posture of a moving object in space comprising:

   - a fixed electro-optic device of known orientation, comprising at least one emission source (S), an image sensor and image analysis means; and
   - an optical assembly comprising at least one optical retroreflector (Re, RS) disposed on the moving object,

   **characterised in that**:

   - the optical retroreflector is an optical sphere (RS) with a variable index comprising a transparent hemisphere and a reflective hemisphere such as a light ray, which is refracted by the transparent hemisphere, reflected by the reflective hemisphere and when refracted a second time by the transparent hemisphere emerges parallel to its direction of incidence;
   - the optical retroreflector (RS) comprises a mesh (FMO) comprising at least three opaque, thin wires of known geometric arrangement;
   - the image of the retroreflector illuminated by the source forms a reflection (RL) on the image sensor, said reflection comprising at least the two images of the shadow from one of the three wires formed by the retroreflector;
   - the image analysis means detect at least the orientation of the leakage line provided by said images, said orientation representing a first parameter of the posture of the moving object.

2. The system for detecting the posture of a moving object according to claim 1, **characterised in that** said analysis means detect the shape of the reflection, said shape representing at least one second parameter of the posture of the moving object.

3. The system for detecting the posture of a moving object according to claim 1, **characterised in that** the wire mesh (FMO) comprises eight straight wires of equal length, four first wires forming a square and four second wires parallel to each other, perpendicular to the plane of the square, one of the ends of the four second wires coinciding with one of the ends of said four first wires.

4. The system for detecting the posture of a moving object according to claim 1, **characterised in that** the wire mesh (FMO) comprises four semi-circular wires of identical shape, two first wires being arranged in two first planes symmetrically parallel relative to the centre of the sphere, two second wires being arranged in two second planes systematically parallel relative to the centre of the sphere, said two second planes being perpendicular to said two first planes.

5. The system for detecting the posture of a moving object according to claim 4, **characterised in that** the mesh (FMO) comprises third semi-circular wires of identical shape obliquely intersecting the first wires and/or the second wires.

6. The system for detecting the posture of a moving object according to claim 1, **characterised in that** the reflection profile (RE) is an inclined ellipsis, with the incline of the ellipsis, the lengths of the large and of the small axis representing parameters of the posture of the moving object.

7. A pilot helmet, **characterised in that** it comprises at least one optical retroreflector intended to operate in a system for detecting the posture of a moving object according to any one of the preceding claims.

# FIG. 1

# FIG. 2

# FIG. 3

R'

Q'0    P'0

•T'

P'    Q'

R'0

# FIG. 4

E

•T'

F

# FIG. 5

# FIG. 6

# FIG. 7

## FIG. 8

## FIG. 9

# FIG. 10

# FIG. 11

FIG. 12

FIG. 13

FIG. 14

FIG. 15

FIG. 16

FIG. 17

# FIG. 18

# FIG. 19

FIG. 20

FIG. 21

FIG. 22

## FIG. 23

## FIG. 24

FIG. 25

FIG. 26

FIG. 27

FIG. 28

FIG. 29

RS →

FMO

z
x
y

## FIG. 30

z2   z1

x2        x1   y1
E2        E1
    T
E4        E3
x4        x3   y2

RS

z
y

## FIG. 31

FIG. 32

FIG. 33

FIG. 34

FIG. 35

FIG. 36

FIG. 37

FIG. 38

FIG. 39

FIG. 40

FIG. 41

# FIG. 42

# FIG. 43

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060109561 A,  Handerek, Laycock

**Littérature non-brevet citée dans la description**

- **OAKLEY JP.** Whole-angle spherical rétro reflector using concentric layers of homogenous optical média. *Appl. Optic,* 2007, vol. 46 (7), 1026-1031

- **ANHEIER NC et al.** FY 2008 Miniature Spherical Retroreflectors - Final Report. *Pacific North West National Laboratory,* Février 2009, 18344